Europäisches Patentamt

European Patent Office

Office européen des brevets

(11) Numéro de publication: **0 435 858 A1**

# (12) DEMANDE DE BREVET EUROPEEN

(21) Numéro de dépôt: **91200174.0**

(51) Int. Cl.5: **F16C 29/06**

(22) Date de dépôt: **28.11.89**

(30) Priorité: **25.01.89 FR 8901092**

(43) Date de publication de la demande:
**03.07.91 Bulletin 91/27**

(60) Numéro de publication de la demande initiale
en application de l'article 76 CBE : **0 379 827**

(84) Etats contractants désignés:
**DE ES FR GB**

(71) Demandeur: **Lecomte, Marc**
**9, rue Plaisance**
**F-33700 Merignac(FR)**

(72) Inventeur: **Lecomte, Marc**
**9, rue Plaisance**
**F-33700 Merignac(FR)**

(74) Mandataire: **Trolliet, Jean-Claude**
**Cabinet BURDIPAT 20, cours du Chapeau**
**Rouge**
**F-33000 Bordeaux(FR)**

(54) **Patin de guide linéaire de précision.**

(57) L'invention concerne un patin (14) de guide linéaire de précision coulissant sur un rail de guidage
(1) de forme prismatique au moyen de billes (19,
19a) maintenues en appui sur des rainures (18, 23)
servant de chemin de roulement aménagées sur les
ailes (17) du patin (14) enserrant le rail (1) et des
gorges (10) aménagées sur le rail (1), chaque chemin de roulement du patin étant prolongé et relié à
un alésage (24) et à une rainure (21) aménagée
dans la matière constituant le corps de sorte à
permettre le recyclage permanent des billes (19,
19a) durant son déplacement.

**Fig. 2**

EP 0 435 858 A1

# PATIN DE GUIDE LINÉAIRE DE PRÉCISION

La présente invention est relative à un patin de guide linéaire de précision du type comportant un rail de forme prismatique et un patin à billes.

On connaît les guides linéaires de précision constitués d'au moins un rail de section circulaire et d'une douille coulissante munie de circuits de billes internes facilitant la translation de ladite douille, ce type de guides permet des grands et petits déplacements, dans le cas de petits déplacements le rail est fixé sur des supports en ses extrémités et la douille est fermée, dans le cas de grands déplacements nécessitant l'aboutement de plusieurs rails et la fixation intermédiaire desdits rails par un ou plusieurs supports, la douille est ouverte pour permettre le passage du ou des supports, bien que l'aboutement des tronçons de rail soit aisé puisque de section circulaire permettant de réaliser des alésages en extrémité parfaitement concentriques destinés à recevoir les pions d'assemblage, le guide est limité en charge dû au contact ponctuel des billes avec le rail, d'autre part la section circulaire du rail n'assure pas de retenue en rotation ce qui nécessite afin de pallier à cet inconvénient l'utilisation d'un second rail parallèle et pour les douilles ouvertes la capacité de charge est limitée étant donné leur élasticité.

On connaît aussi les guides présentant une douille à billes coulissant sur un rail triangulaire dont chaque sommet est aménagé de part et d'autre de gorges sur lesquelles portent les billes de la douille, ce type de guides permet de supporter des charges plus importantes que ceux précédemment décrits compte tenu que les billes portent dans les gorges et permettent la transmission de couples et de ce fait obtenir un mouvement combiné translation/rotation, toutefois les déplacements sont limités à de petites longueurs étant donné que le rail ne peut être fixé qu'en ses extrémités.

Il est aussi connu les guides linéaires constitués de rails à section prismatique dotés d'au moins une gorge sur chacune de leurs faces latérales servant de chemin de roulement à des billes mobiles maintenues dans les gorges se profilant aménagées de part et d'autre des machoires internes du patin et dont leur mouvement sans fin est obtenu par un couloir de retour aménagé dans lesdites machoires, tel que décrit dans les brevets FR 2 546 995, 2 516 612, 2 545 557, 730 922, 2302 446, ce type de guides présente des avantages certains notamment au niveau du contact des billes dans les gorges ce qui permet d'augmenter la capacité de charge, leur faible encombrement et leur grande rigidité compte tenu de la fixation directe du rail sur le bâti, la disposition des billes sur les faces latérales du rail permet de supporter des couples transversaux. Ce type de guides présente certains inconvénients, il nécessite des opérations de rectifications importantes, pour sa fixation sur le bâti notamment celles de deux faces de référence à 90° tant pour le rail que pour celles du bâti-support recevant le rail, d'autre part pour réaliser des guidages de grandes longueurs nécessitant l'aboutement de plusieurs rails, cette opération est délicate pour obtenir l'alignement parfait desdits rails car il est quasiment impossible comme pour les rails de section triangulaire de réaliser des alésages cylindriques en extrémité de manière concentrique permettant de recevoir des pions d'assemblage, comme il est aussi impossible de combiner les deux mouvements translation et rotation.

Dans tous les cas des guides linéaires précédemment décrits, les patins ou douilles sont composés d'un très grand nombre d'éléments de réalisation complexe grévant le prix de revient.

L'invention a pour but de pallier aux inconvénients précédemment exposés.

L'invention a pour objet un patin de guide linéaire de précision coulissant sur un rail de guidage de forme prismatique, le patin coulissant étant muni de billes mobiles maintenues en appui sur des gorges et rainures servant de chemin de roulement caractérisé en ce que les billes mobiles sont maintenues sur les ailes du patin enserrant le rail dans les gorges ou rainures circulaires aménagées sur lesdites ailes notamment une rainure en chaque extrémité interne inférieure et une rainure intermédiaire sur chacune des faces intérieures desdites ailes, chaque chemin de roulement du patin étant prolongé et relié à un conduit aménagé dans la matière constituant le corps du patin de sorte à permettre le recyclage permanent des billes durant le déplacement de ce dernier, notamment une rainure sur la face inférieure de chaque aile pour les billes des chemins de roulement inférieurs et au travers d'un alésage pratiqué dans les ailes pour les billes des chemins de roulement intermédiaires, le prolongement des chemins de roulement permettant le raccordement avec les conduits de recyclage des billes étant réalisé au moyen d'une rainure ou gorge circulaire aménagée dans une cage monobloc inférieure et dans les pièces d'extrémités du patin, les billes sur les chemins de roulement du patin étant maintenues au moyen des cages inférieures et languettes solidaires desdites cages, au moyen des cages et fils d'acier ou au moyen des cages inférieures et d'un élément formé métallique ou en matière synthétique.

D'autres caractéristiques et avantages de l'invention ressortiront plus clairement de la description qui va suivre faite en regard des dessins joints donnés à titre d'exemple non limitatif, où :

- la figure 1 est une vue en perspective d'un rail et d'un patin,
- la figure 2, une vue en coupe d'un rail de guidage et d'un patin,
- les figures 3, 4 et 5, une vue en coupe d'un rail de guidage et de patins présentant différents modes de maintien des billes dans les chemins de roulement,
- la figure 6, une vue en perspective et en coupe de la cage inférieure monobloc permettant le maintien et le recyclage des billes dans les chemins de roulement pour la réalisation de la figure 2,
- la figure 7, une vue en perspective de la cage inférieure monobloc permettant le maintien et le recyclage des billes des réalisations représentées figures 3, 4 et 5,
- la figure 8, les pièces communes en perspective des extrémités de chaque patin,
- les figures 9 et 10, une vue de dessus d'une variante de réalisation des extrémités des cages monoblocs représentées figures 8 et 9 ainsi que les extrémités communes des patins,
- la figure 11, une vue en perspective de la variante représentée figure 9.

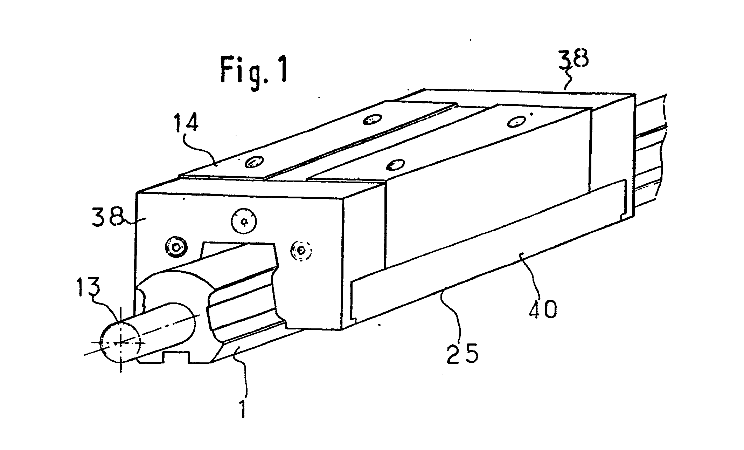

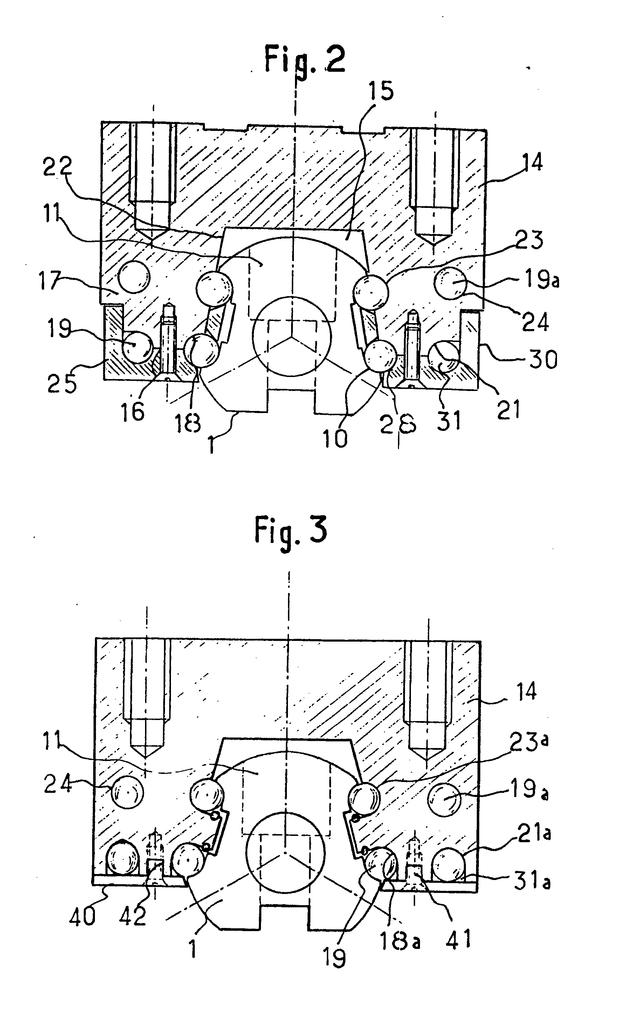

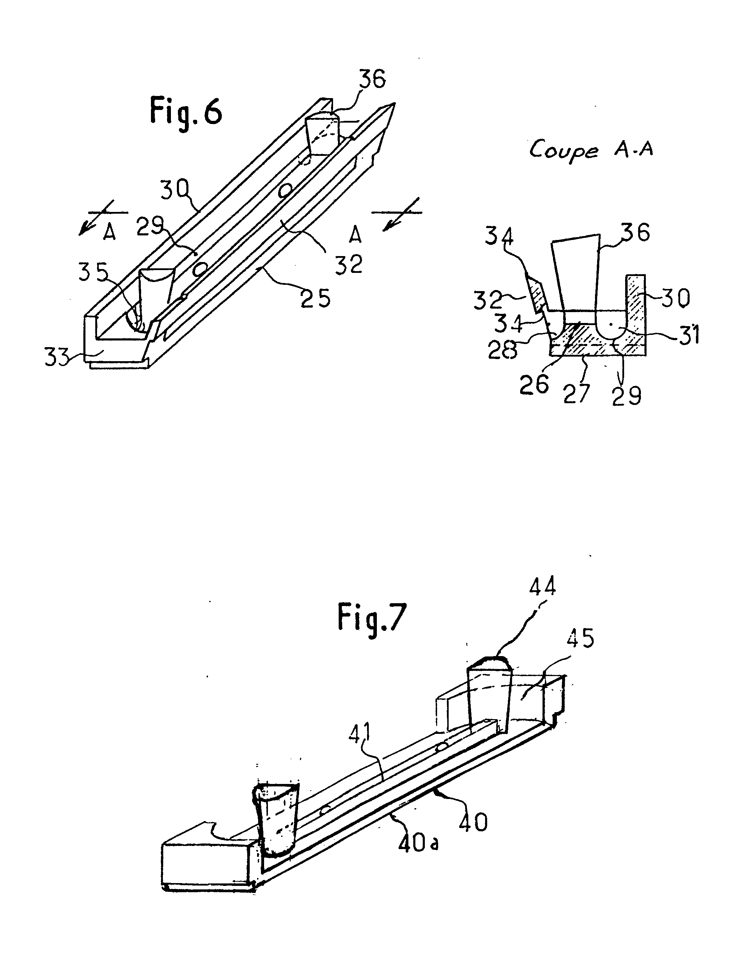

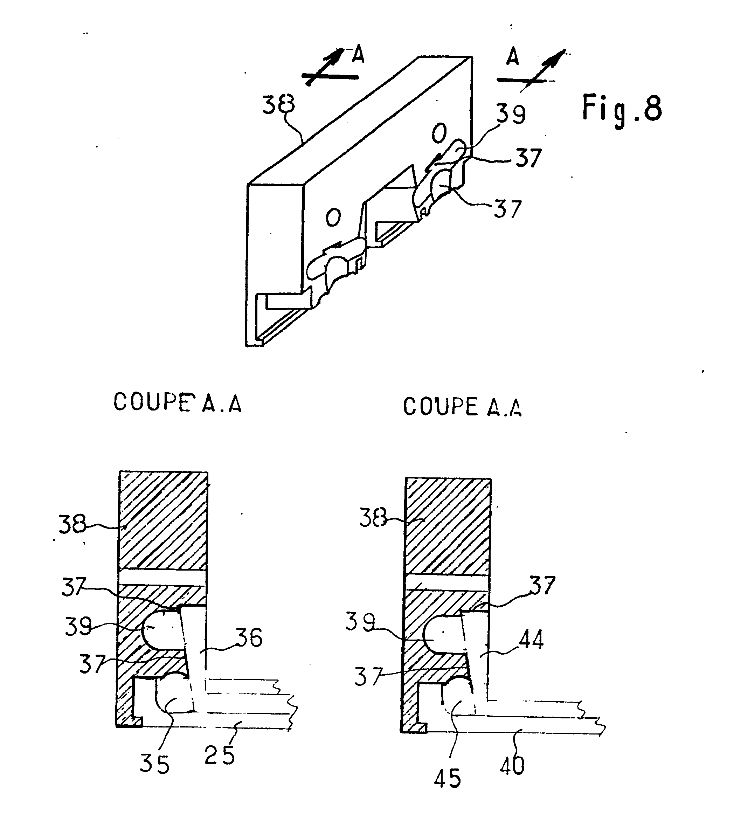

Selon les figures 1 et 2, sur le rail 1 coulisse un patin 14 en acier présentant une rainure centrale 15 de section légérement supérieure à celle du rail 1 afin de contenir ce dernier, en extrémité interne inférieure 16 de chaque aile 17 est aménagée une rainure circulaire 18 recevant, maintenant et servant de chemin de roulement à un premier jeu de billes 19 prenant appui sur lesdites rainures 18 et gorges 10 du rail 1, en extrémité inférieure externe 20 des ailes 17 est aménagée une rainure circulaire 21 permettant la circulation et le recyclage desdites billes 19 lors du déplacement du patin 14 sur le rail 1, intermédiairement entre l'extrémité inférieure 16 de chaque aile 17 et supérieure interne 22 une rainure circulaire 23 est aménagée pour recevoir, maintenir et servir de chemin de roulement à un second jeu de billes 19a prenant appui sur les rainures 23 et 10 du rail 1, de manière à permettre la circulation et le recyclage des billes 19a lors du déplacement du patin 14 un alésage 24 est réalisé dans la matière constituant le patin 14, afin de maintenir les billes 19 et 19a dans les rainures 18 et 23 en partie inférieure des ailes 17 une cage monobloc 25 représentée figure 6 en matière moulable est rapportée et fixée sous chacune des extrémités inférieures 16 des ailes 17, sur la partie supérieure 26 du socle 27 est aménagée une rainure circulaire extérieure 28 et intérieure 29, la rainure 28 maintenant le jeu de billes en appui sur la rainure 18 tout en complétant ladite rainure, la rainure 29 étant destinée à compléter la rainure 21 en constituant avec le talon 30 le couloir 31 de recyclage du premier jeu de billes 19, le maintien des deux jeux de billes 19 et 19a sur chaque aile 17 étant obtenu par une languette latérale 32 solidaire des extrémités 33 de la cage monobloc 25, la position de la languette 32 est telle qu'elle engendre le maintien des billes 19 et 19a dans les rainures 18, 23, 28, tout en ménageant une ouverture pour le passage d'une portion de billes 19, 19a, afin que ces dernières prennent appui sur les chemins de roulement 10 du rail 1, ladite languette 32 présente des faces transversales horizontales 34 en biais planes ou concaves de manière à se conformer au profil des jeux de billes 19 et 19a, aux extrémités 33 de la cage monobloc 25 les couloirs 31 et rainures 28 sont raccordés au moyen d'une rainure circulaire 35, l'arrondi interne 36 facilitant la circulation des billes 19 et 19a est prolongé jusqu'au niveau supérieur du second jeu de billes 19a et s'encastre lors du montage du patin 14 dans les évidements 37 aménagés à cet effet dans les pièces d'extrémités 38 représentées figure 8 et dans la rainure circulaire 39 engendrant le couloir de liaison entre l'alésage 24 et la rainure 23, il va de soi que les pièces d'extrémités 38 et les joints d'étanchéité non représentés sont assemblés de manière connue, par vis notamment.

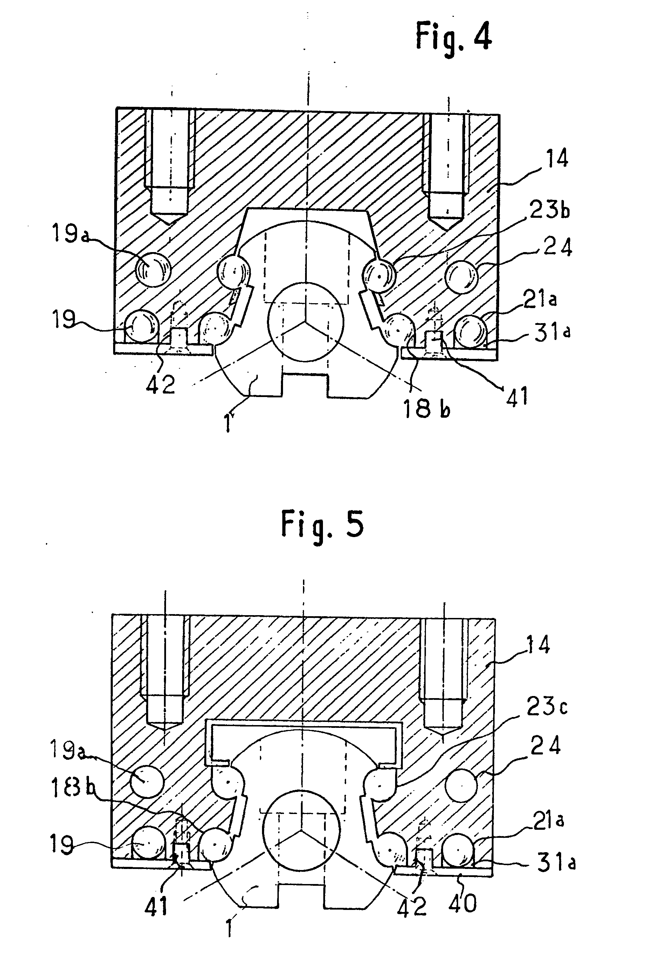

Selon les variantes figures 3 à 5 représentant des modes de maintien des jeux de billes 19 et 19a et les usinages s'y rapportant, le jeu de billes 19 inférieur d'une aile 17 de patin est maintenu au moyen de la cage monobloc 40 représentée figure 7, cette dernière est dotée en son centre d'une languette 41 s'insérant dans la rainure 42 aménagée sous l'extrémité inférieure de l'aile 17, aux extrémités 43 de la languette 41 un prolongement vertical 44 arrondi est aménagé permettant comme précédemment décrit de faciliter la circulation des billes 19 et 19a dans les rainures circulaires 45 aménagées aux extrémités de la cage monobloc 40 reliant les rainures 18a, 18b, avec la rainure circulaire 21a et le couloir 31a dont la face ouverte est obturée par le socle 40a et la rainure 39 des pièces d'extrémités 38 reliant les rainures 23a, 23b, 23c, avec les alésages 24, le prolongement vertical 44 arrondi s'encastrant dans la rainure 39 et les évidements 37 aménagés sur les pièces d'extrémités 38. Il va de soi que les pièces d'extrémités 38 sont adaptées pour permettre l'encastrement des extrémités des cages monoblocs 25 et 40.

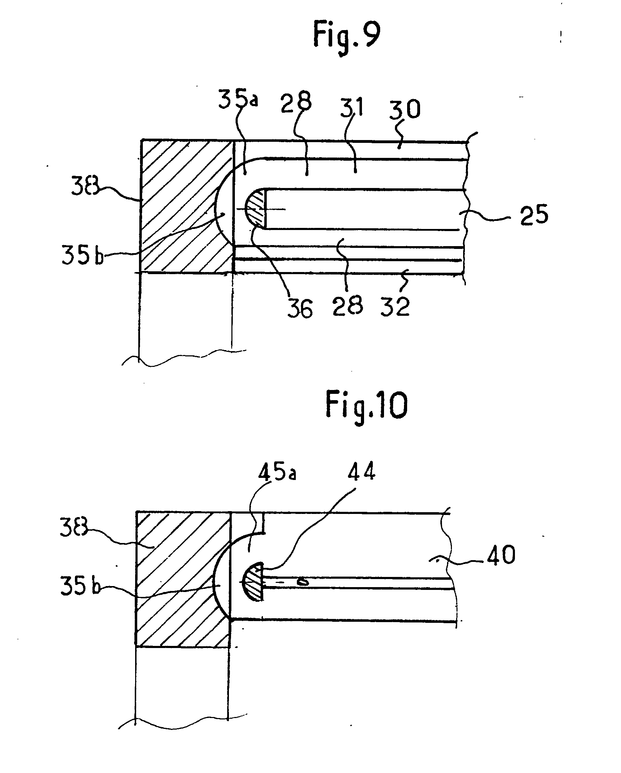

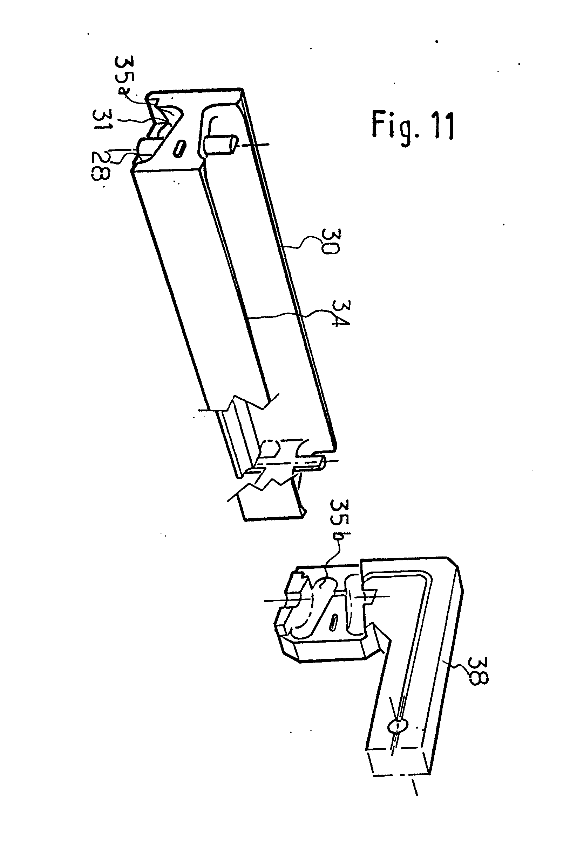

Selon les variantes des figures 9, 10 et 11, en extrémité 33 de la cage monobloc 25 les couloirs 31 et rainures 28 sont raccordés au moyen d'une rainure circulaire 35a partielle, le complément 35b étant aménagé dans les pièces d'extrémités 38 de même que pour la cage monobloc 40, la rainure 45a est partielle, son complément 35b étant aménagé comme précédemment décrit dans les pièces d'extrémités 38.

## Revendications

1. Patin de guide linéaire de précision coulissant sur un rail de guidage (1) de forme prismatique, le patin coulissant (14) étant muni de billes mobiles (19, 19a) maintenues en appui sur des gorges et rainures servant de chemin de roulement, ledit patin (14) présentant une rainure centrale (15) contenant le rail (1), les billes (19) étant en appui dans une rainure circulaire (18) aménagée en partie interne inférieure (16) de chacune des ailes (17) et les billes (19a) dans une rainure circulaire (23) aménagée entre l'extrémité inférieure (16) et supérieure interne (22) de chaque aile (17), les rainures ou chemin de roulement (18, 23) étant reliées à des conduits (21, 24) permettant le recyclage permanent des billes (19, 19a) lors du déplacement du patin (14), le conduit (21) étant une rainure circulaire aménagée en extrémité inférieure (16) des ailes (17) pour les billes (19) et un alésage (24) pratiqué dans chacune des ailes (17) pour les billes (19a), le raccordement des chemins de roulement (18, 23) avec les conduits (21, 24) étant obtenu par une rainure circulaire (35) pour les billes (19) et (39) pour les billes (19a), lesdites rainures étant aménagées sur les pièces d'extrémités (38) du patin (14), les billes (19, 19a) étant maintenues sur les chemins de roulement (18, 23) au moyen d'une cage inférieure monobloc (25), caractérisé en ce que chaque cage monobloc (25) fixée en partie inférieure (16) des ailes (17) du patin (14) présente en la partie supérieure (26) du socle (27) une rainure circulaire extérieure (28) et intérieure (29), la rainure (28) ayant pour rôle de compléter la rainure (18) du patin pour le jeu de billes inférieur (19) et la rainure (29) complète la rainure (21) afin de constituer avec le talon (30) le couloir (31) de recyclage du jeu de billes (19), les jeux de billes (19) inférieur et (19a) intermédiaire étant maintenus dans les rainures (18, 28, 23) au moyen d'une languette latérale (32) solidaire des extrémités (33) de la cage monobloc (25) dont les faces latérales horizontales (34) sont en biais, planes ou concaves de manière à se conformer au profil des jeux de billes (19, 19a) tout en ménageant une ouverture pour le passage d'une portion de billes (19, 19a) et leur appui sur les chemins de roulement (10) du rail (1).

2. Patin de guide linéaire de précision selon les revendications 1 et 2 caractérisé en ce que le couloir (31) et les rainures (18, 28) sont raccordés par des rainures circulaires (35) aménagées en extrémité des cages (25) et dont un arrondi interne (36) facilite la circulation des billes (19, 19a), ledit arrondi étant prolongé jusqu'au niveau supérieur du second jeu de billes (19a) et s'encastre dans les évidements (37) aménagé sur chaque pièce d'extrémité (38) et dans une rainure circulaire (39) engendrant le couloir de liaison entre l'alésage (24) et la rainure (23).

3. Patin de guide linéaire de précision selon la revendication 1 caractérisé en ce que selon le mode de maintien du jeu intermédiaire de billes (19a) dans les rainures (23a) par fils d'acier, (23b) par languettes, (23c) par éléments formés, une cage monobloc inférieure (40) maintient le jeu de billes (19) en partie inférieure de chaque aile (17) dans les rainures (18a, 18b) ainsi que dans le couloir (31a) que le socle (40a) obture, ladite cage monobloc (40) étant dotée d'une languette centrale (41) s'insérant dans la rainure (42) aménagée sur l'extrémité inférieure de chaque aile (17) aux extrémités de la cage monobloc (40) sont aménagées des rainures circulaires (45) reliant les rainures (18a, 18b) avec les couloirs (31a) permettant la circulation des billes (19), afin de faciliter leur circulation un arrondi intérieur est aménagé aux extrémités de la languette (41), ledit arrondi se prolongeant verticalement jusqu'à l'aplomb de la rainure circulaire (39) aménagée dans les pièces d'extrémités (38) s'encastrant dans lesdites rainures (39) et dans les évidements (37) facilitant la circulation du jeu de billes (19a).

4. Patin de guide linéaire de précision selon la revendication 1 caractérisé en ce que la face supérieure du patin (14) et de la rainure (15) peuvent présenter une surface plane ou circulaire.

5. Patin de guide linéaire de précision selon la revendication 2 caractérisé en ce que le couloir (31) et rainure (28) de la cage monobloc (25) sont raccordés au moyen d'une rainure circulaire (35a) partielle, le complément (35b) étant aménagé dans la paroi d'extrémité (38).

6. Patin de guide linéaire de précision selon la revendication 3 caractérisé en ce que le couloir (31a) et la rainure (18a) en leurs extrémités par la cage monobloc (40) sont raccordés au moyen d'une rainure partielle (45a), son complément (35b) étant aménagé dans la paroi d'extrémité (38).

Fig.1

# Fig. 2

# Fig. 3

## Fig. 4

## Fig. 5

Fig.6

36

30

29

A

35

32

A

25

33

Coupe A·A

34

36

32

30

34

31

28

26   27   29

Fig.7

44

45

41

40

40a

A A

38

39

0

37

0

37

**Fig.8**

COUPE A.A

COUPE A.A

38

37

39

37

36

35    25

38

37

39

44

37

45

40

## Fig.9

## Fig.10

Fig. 11

**Office européen
des brevets**

# RAPPORT DE RECHERCHE
# EUROPEENNE

Numéro de la demande

## EP 91 20 0174

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-2 348 231   (H. TERAMACHI)<br>* revendications 1-8; figure 2 *<br>– – – | 1 | F 16<br>C 29/06 |
| A | FR-A-2 557 653   (H. TERAMACHI)<br>* page 11, ligne 12 - page 13, ligne 23; figures 12-14 *<br>– – – | 1 | |
| A | FR-A-2 525 301   (NIPPON SEIKO K.K.)<br>– – – | | |
| A | FR-A-2 570 777   (H. TERAMACHI)<br>– – – – – | | |

DOMAINES TECHNIQUES
RECHERCHES (Int. Cl.5)

F 16 C

Le présent rapport de recherche a été établi pour toutes les revendications

| Lieu de la recherche | Date d'achèvement de la recherche | Examinateur |
|---|---|---|
| Berlin | 12 mars 91 | HOFFMANN M.P. |